# FASCICULE DE BREVET EUROPEEN

(11) **EP 3 474 419 B1**
(45) Date de publication et mention de la délivrance du brevet: **20.10.2021**
(21) Numéro de dépôt: 17209405.4
(22) Date de dépôt: 21.12.2017
(51) Int. Cl.: H02K 5/22, H02K 7/116, H02K 11/33, H02K 5/10, F16K 31/00, H01R 12/71, H01R 13/52

(54) **SERVOMOTEUR POUR VANNE OU VANTELLE INDUSTRIELLE AVEC CARTE DE RACCORDEMENT ET CONNECTEUR**
SERVOMOTOR FÜR INDUSTRIEVENTILE ODER -SCHIEBER MIT ANSCHLUSSKARTE UND STECKER
ACTUATOR FOR INDUSTRIAL VALVE OR GATE WITH CONNECTION BOARD AND CONNECTOR

(30) Priorité: 20.10.2017 FR 1759948
(43) Date de publication de la demande: 24.04.2019
(73) Titulaire: Bernard Controls, 95500 Gonesse (FR)
(72) Inventeur: DELANNES, Alexis, 94130 Nogent sur Marne (FR); MEDARHRI, Jaafar, 93350 Le Bourget (FR)
(74) Mandataire: Lefevre-Groboillot, David André

(56) Documents cités:
- EP-A2- 2 359 373
- US-A1- 2005 122 694
- US-A1- 2014 125 161
- US-A1- 2017 133 906
- US-B1- 6 317 332
- US-B1- 6 683 789

## Description

L'invention porte sur un ensemble servomoteur électrique pour organes de régulation de circuits de fluide en contexte industriel, tels des vannes ou vantelles industrielles, et un ensemble pour mise en œuvre d'un servomoteur avec connecteur.

Les servomoteurs pour vannes industrielles sont des systèmes électromécaniques agissant sur une vanne d'un circuit industriel de fluide, pour, en fonction de la pression rencontrée dans la vanne, agir pour la fermer, l'ouvrir ou la maintenir dans son état courant.

Les servomoteurs sont adaptés pour différents types de vannes, et être donc des servomoteurs quart de tour ou multitours. Ils sont souvent utilisés dans des conditions environnementales exigeantes, et doivent donc souvent être étanches, imperméables aux poussières et résistant au froid ou à la chaleur. En effet, on trouve des servomoteurs pour vannes industrielles dans des environnements difficiles tels les raffineries, les centrales nucléaires, ou les stations d'épuration.

Les servomoteurs électriques comprennent un moteur électrique et une chaîne cinématique pour transmettre une puissance du moteur à un élément d'actionnement de la vanne, en démultipliant de manière adaptée le couple fourni par le moteur.

Ils possèdent aussi des capteurs pour suivre l'état de la vanne et une unité de commande locale pour contrôler le moteur et la chaîne cinématique. Celle-ci peut recevoir des commandes d'une unité de commande extérieure au servomoteur placée ailleurs dans l'installation industrielle, et pouvant être chargée de commander plusieurs servomoteurs placés sur différentes vannes de l'installation.

Pour transmettre ces commandes, ainsi que la puissance électrique nécessaire au fonctionnement du moteur, ainsi qu'en sens inverse les signaux en provenance des capteurs internes une connexion électrique à contacts multiples, indépendnat les uns des autres, est présente sur une paroi d'une des enveloppes du servomoteur. Classiquement, à chaque fois que le servomoteur est démonté puis remonté sur une vanne donnée, il convient de démonter la connexion électrique à contacts multiples, ce qui implique de nombreuses opérations de vissage et de dévissage de vis sur des cosses à œillet. Cela est long et fastidieux et parfois source d'erreur. L'étanchéité est assurée notamment à l'aide de presse-étoupes qu'il convient de serrer.

Le document EP2359373A2 divulgue un servomoteur pour une vanne industrielle. Les documents US6683789B1, US6317332B1 et US2005/122694A1 divulguent un boîtier électronique avec connecteur amovible.

On souhaite par conséquent mettre en place des solutions alternatives, avec du matériel plus facile à utiliser, et de préférence mois lourd.

Pour cela il est proposé un ensemble servomoteur pour vanne industrielle comprenant des moyens d'accouplement à un arbre de vanne industrielle, des moyens pour recevoir une puissance électrique et une commande externe et en sens inverse envoyer des signaux, et un moteur électrique et une chaîne cinématique reliés l'un à l'autre pour appliquer une action sur ladite vanne, ainsi qu'une unité de commande locale pour commander le moteur et la chaîne cinématique sous le contrôle de la commande externe.

L'ensemble servomoteur est remarquable en ce que lesdits moyens pour recevoir une puissance électrique et une commande externe comprennent un boîtier de protection de l'unité de commande locale et une carte de raccordement obturant une face ajourée du boîtier, ainsi que des cosses métalliques définissant des contacts électriques individuels en saillie de la carte du côté externe du boîtier pour raccordement manuel sans outil ou vis, la carte de raccordement étant placée pour obturer la face ajourée du côté intérieur de celle-ci, et l'ensemble servomoteur comprend de plus une pièce en matériau élastomère s'étendant parallèlement à la carte de raccordement sur sa face externe, percée pour laisser passer les cosses et entourer chacune desdites cosses d'une lèvre formée dans le matériau élastomère pour l'étanchéité, et positionnée pour également assurer l'étanchéité entre la carte de raccordement et le contour interne de la face ajourée du boîtier.

L'invention consiste aussi en un ensemble servomoteur avec connecteur comprenant un servomoteur pour vanne industrielle tel qu'évoqué plus haut, comprenant de plus un connecteur amovible comprenant un boîtier et des contacteurs complémentaires desdites cosses disposés sur une face du boîtier pour raccorder ou déconnecter simultanément lesdites cosses.

Selon des caractéristiques optionnelles et avantageuses :
la pièce en matériau élastomère comprend des lèvres sur toute sa circonférence, qu'elle est assemblée avec le contour interne de la face ajourée du boîtier par serrage, et que les lèvres sont déformées lors du serrage pour assurer l'étanchéité ;
la pièce en matériau élastomère est en caoutchouc EPDM ;
la carte de raccordement est reliée à l'unité de commande locale sur sa face interne avec un câblage réduit par rapport à ce qui se faisait avec l'art antérieur;
la carte de raccordement comprend un circuit imprimé, ainsi qu'une pièce en plastique rigide assemblée au circuit imprimé sur sa face opposée à la pièce en matériau élastomère, pour assurer le maintien de la carte de raccordement, et lui fournir de la rigidité, et ainsi faciliter l'insertion de cosses complémentaires sur lesdites cosses métalliques ;
   - dans un mode de réalisation, les contacteurs complémentaires sont des fourches insérées en force dans une paroi du boîtier ;
   - dans un autre mode de réalisation, les contacteurs complémentaires sont des fourches maintenues avec flottement entre deux pièces formant une paroi du boîtier ;
avantageusement, les contacteurs complémentaires comprennent un élément de contact pré-contraint pour favoriser le contact électrique ;

Le servomoteur peut notamment être un servomoteur multitours ou quart de tour. La chaîne cinématique peut à titre d'exemple comprendre ou être constituée d'une vis sans fin et un train épicycloïdal.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue d'un servomoteur selon l'invention ;
- la figure 2 est une vue du boîtier électrique du servomoteur de la figure 1 ;
- la figure 3 est une vue, éclatée, d'un aspect de l'invention correspondant aux vues des figures 1 et 2 ;
- la figure 4 est une vue en coupe du même aspect de l'invention ;
- la figure 5 est une vue de trois quart d'un deuxième aspect de l'invention ;
- la figure 6 est une vue éclatée d'un premier mode de réalisation du deuxième aspect de l'invention ;
- la figure 7 est une vue de détail de ce premier mode de réalisation ;
- la figure 8 est une vue éclatée d'un deuxième mode de réalisation du deuxième aspect de l'invention ;
- la figure 9 est une vue de détail de ce deuxième mode de réalisation ;
- la figure 10 est une vue d'un détail de réalisation du deuxième mode de réalisation.

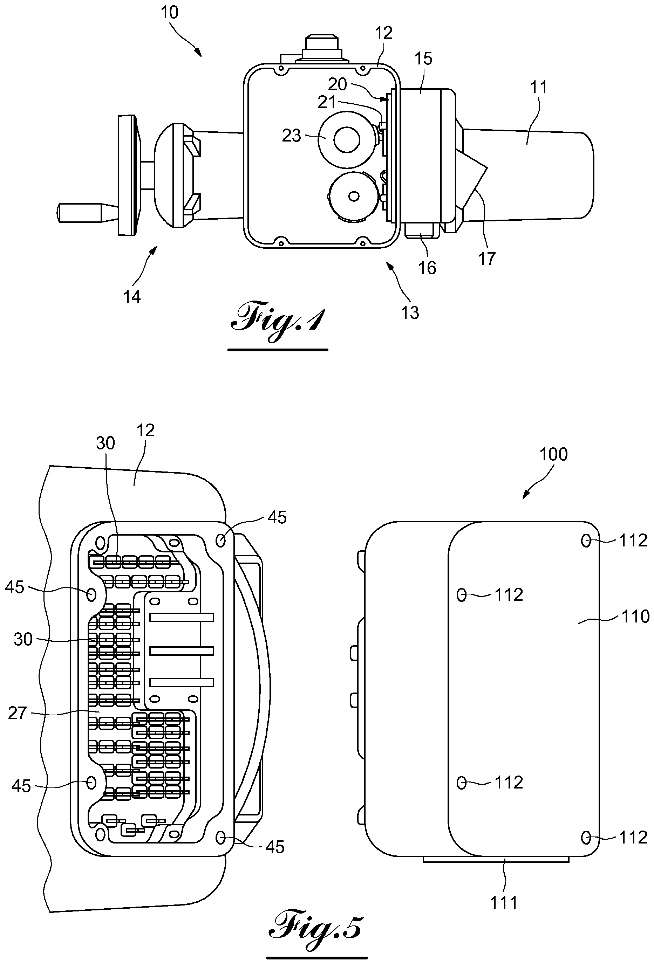

En figure 1, on a représenté un servomoteur 10 comprenant un moteur électrique 11 dans une enveloppe protectrice, un boîtier électrique 12 pour accueillir les fonctions de contrôle et commande du servomoteur, des moyens d'accouplement 13 (en arrière sur la figure) à une vanne, une commande manuelle sous la forme d'un volant 14, un boîtier d'interface client 15, une sortie pour les câbles 16 ou 17 sur le boitier d'interface client 15 ou son couvercle. Le servomoteur peut comprendre une interface homme-machine avec écran à cristaux liquides et boutons-poussoirs (non représentée).

L'une des faces du boîtier électrique 12 est ajourée mais obturée par une plaque de connexion électrique 20. Celle-ci a une face tournée vers l'extérieur du boîtier 12, et une face tournée vers l'intérieur de celui-ci. Le boîtier d'interface client 15 est fixé au boîtier électrique 12 sur sa face obturée autour de la plaque de connexion électrique 20, par quatre vis (non représentée).

À l'intérieur du boîtier électrique 12, représenté ici dans une version du servomoteur sans électronique, des cames 23 interagissent avec des interrupteurs 21 placés sur la face intérieure de la plaque de connexion électrique 20. La plaque de connexion électrique 20 permet une connexion électrique sans câblage de l'intérieur du servomoteur, du moins pour certaines fonctions, comme les connexions liées à des interrupteurs. Un câblage est présent pour la transmission de la puissance et les options éventuelles comme le potentiomètre de recopie de la position de la valve. On précise, à titre non limitatif, que l'invention peut aussi être utilisée avec une version du servomoteur avec électronique, dans laquelle des commandes externes sont adressées de l'utilisateur à l'électronique embarquée du servomoteur, celle-ci étant entre autres chargée du démarrage du moteur et de la définition de son sens de rotation.

La chaîne cinématique du servomoteur comprend une vis sans fin et un train épicycloïdal (non représentés). Ces éléments, ainsi que le moteur électrique, sont contrôlés par l'unité de commande disposée dans le boîtier électrique 12, qui reçoit la puissance électrique et les signaux de commande par la plaque de connexion électrique 20.

Des capteurs (non représentés), mesurent le comportement de la vanne et du moteur, et les informations qu'ils recueillent sont transmises par la plaque de connexion électrique 20 et le boîtier de connexion 15 vers une unité de commande externe (non représentée) qui en retour transmet le signal de commande.

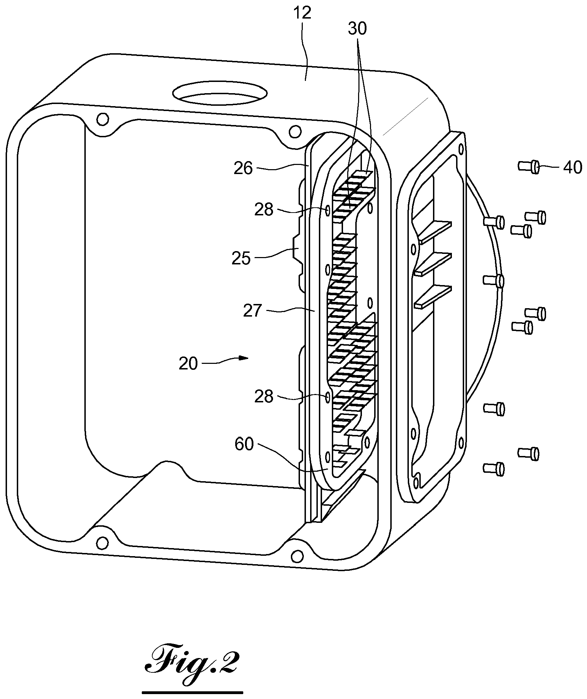

Le boîtier électrique 12 est représenté en figure 2, en vue éclatée, la plaque de connexion électrique 20 étant positionnée avant d'être vissée à l'aide d'une dizaine de vis introduites par l'extérieur du boîtier électrique 12. Ces vis sont référencées 40 et sont introduites dans des trous du boîtier 12 puis dans des trous taraudés 28 de la plaque de connexion électrique 20.

La plaque de connexion électrique 20 est constituée de l'assemblage d'une plaque plastique de maintien 25 du côté interne du boîtier, d'une carte de raccordement 26 sous la forme d'un circuit imprimé, et d'une membrane élastomère 27 placée contre la carte de raccordement 26 sur sa face dirigée vers l'extérieur du boîtier électrique 12. Ces trois plaques, globalement rectangulaires sont placées les unes contre les autres, leurs grands côtés respectifs parallèles les uns aux autres et dans l'ordre indiqué, en sorte de constituer la plaque de connexion électrique 20 qui est également globalement rectangulaire, de dimension adaptée à obturer la face ouverte du boitier électrique 12. Des cosses de connexion électrique individuelles 30 dépassent de la membrane élastomère 27 du côté de l'extérieur du boîtier électrique 12.

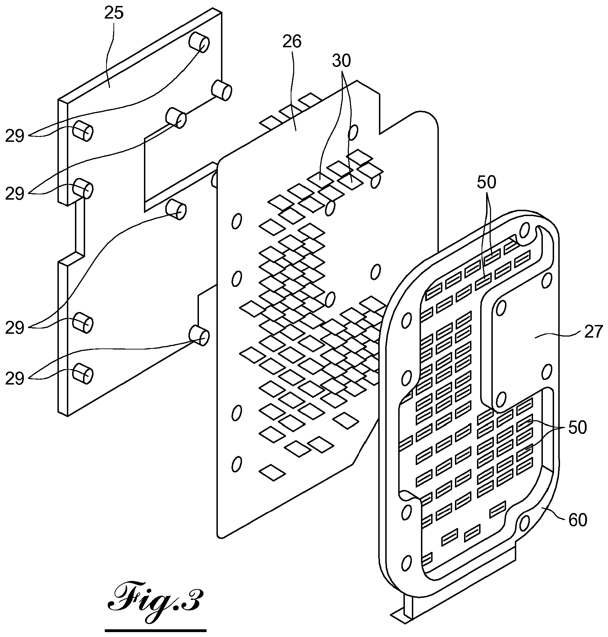

La plaque de connexion électrique 20 est présentée plus en détail en figure 3, en vue éclatée. Les cosses de connexion électrique individuelles 30 sont soudées directement sur la carte de raccordement 26, qui dispose de pistes de métal conducteur tel le cuivre pour la connexion des différents composants intérieurs du boîtier électrique 12. Sur sa face externe, les cosses 30 sont destinées à faire l'objet d'une connexion amovible par l'utilisateur, en fonction des besoins de configuration du servomoteur. Elles peuvent être au nombre de 51. Sur la face interne de la plaque de connexion électrique 20, des cosses de connexion sont aussi présentes, à côté d'interrupteurs, pour la connexion électrique et l'interaction avec les composants internes au boîtier électrique.

La membrane élastomère 27 comporte des fentes 50 traversantes, disposées et dimensionnées pour laisser passer les cosses de connexion 30, et entourées chacune d'une lèvre formée dans le matériau élastomère pour l'étanchéité.

Le matériau élastomère peut être du caoutchouc EPDM (éthylène-propylène-diène monomère).

La bordure 60 de la membrane élastomère 27 comporte aussi une lèvre pour l'étanchéité. Cette lèvre est écrasée lors du serrage de la plaque de connexion électrique 20 contre la face interne de la circonférence de l'ouverture de la face ajourée du boîtier électrique 12. Au final, de par sa conception, la plaque de connexion électrique 20 constitue une barrière d'étanchéité entre extérieur et intérieur du boîtier électrique 12.

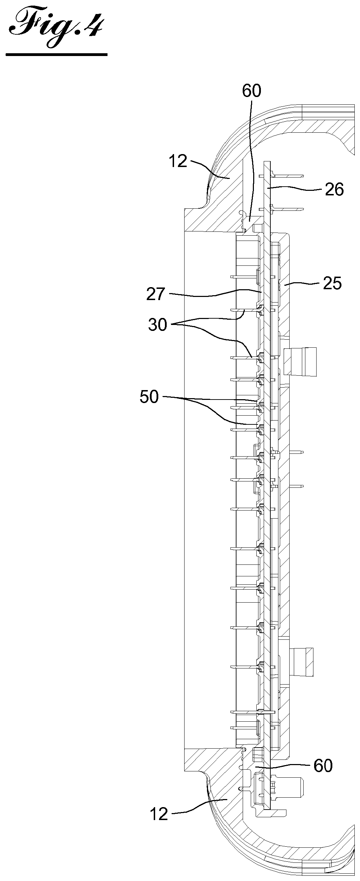

La plaque plastique de maintien 25 comporte des trous taraudés 29 en relief pour former, avec des ouvertures correspondantes de la membrane élastomère 27 et de la carte de raccordement 26, les trous 28 représentés en figure 2 et recevoir les vis 40 également représentées en figure 2, pour fixer les trois parties de la carte de raccordement 26 ensemble et les presser et les retenir contre l'intérieur de la face ajourée du boîtier 12.La figure 4 montre la bordure 60 portant les lèvres écrasées contre le boîtier électrique 12. On voit aussi les cosses 30 traverser les lèvres 50 de la membrane élastomère 27.

Il est aisé pour un utilisateur du servomoteur d'enficher des parties femelles de cosses complémentaires sur les cosses 30. Les connecteurs sont mis en place un par un, à la main.

Les cosses utilisées sont par exemple des cosses Faston (marque de l'entreprise AMP TE).

La figure 5 montre la plaque de connexion électrique 20, dont seule la membrane élastomère 27 et les cosses 30 sont visibles. La plaque de connexion électrique 20 a été vissée à l'intérieur du boîtier électrique 12. Un connecteur multiple 100 est approché et est utilisé pour connecter toutes les cosses 30 en même temps. Le connecteur multiple 100 est conçu sous la forme d'un boîtier parallélépipédique rectangle 110 avec une sortie 111 pour les câbles. Il est vissé au boîtier 12 par des vis qui sont insérées dans les trous 112 du connecteur multiple 100 et engagées dans les trous taraudés 45 du boîtier 12, adaptés au diamètre des vis pour constituer avec elles un système de fixation.

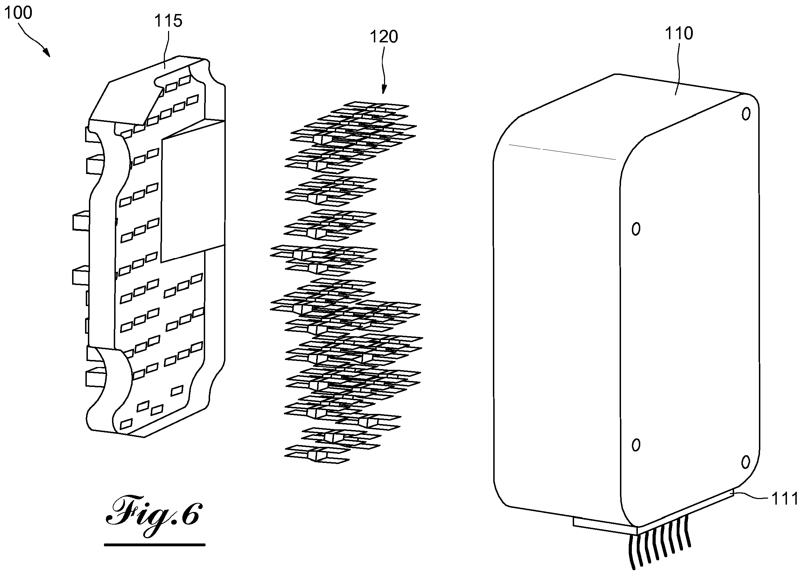

Un premier mode de réalisation du connecteur multiple 100 est présentée en figure 6. Il comprend un support 115 en matériau polymère plastique dans lequel des connecteurs individuels 120 viennent être montés en force, par clipsage, admettant une fois les connecteurs mis en place un débattement parallèle aux cosses 30 du servomoteur. Les connecteurs individuels 120 sont câblés individuellement à l'intérieur du connecteur 100 en sorte d'amener la puissance électrique et les différents signaux de commande et de suivi du servomoteur vers et depuis la sortie 111 pour les câbles.

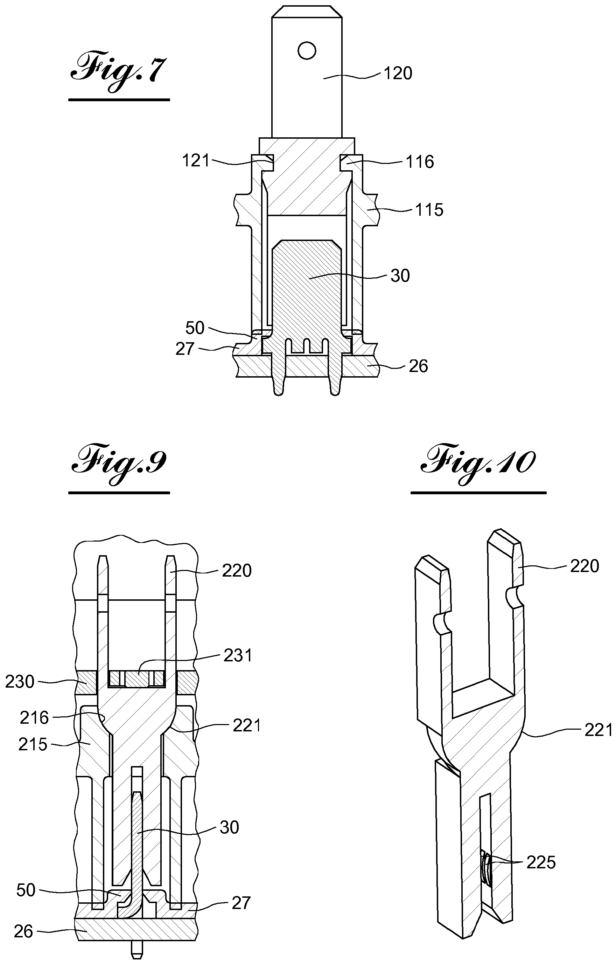

La figure 7 montre le montage d'un connecteur individuel 120 dans le support 115, qui après l'insertion en force, est maintenu par l'insertion d'une nervure 116 dans une rainure 121 du connecteur individuel 120. De part et d'autre de la rainure 121, le connecteur individuel 120 est constitué de deux fourches. La fourche qui fait face à la cosse 30 est serrée et ajustée pour contacter électriquement la cosse 30 avec une bonne fiabilité. La fourche qui est opposée à la cosse 30 est adaptée à être reliée électriquement d'une manière ou d'une autre, notamment, par exemple avec des cosses Faston femelles.

Un multi-lames pré-contraint présent dans la fourche qui fait face à la cosse 30 permet de fiabiliser le contact électrique. Un tel multi-lames est visible en figure 10 dans le cadre du deuxième mode de réalisation.

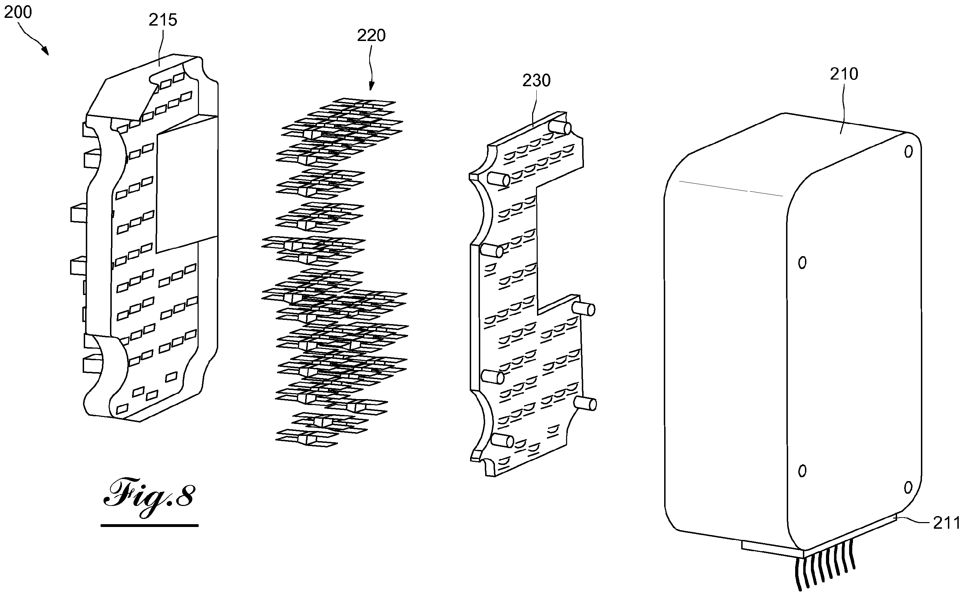

La figure 8 montre une variante du connecteur multiple présenté ci-dessus. Cet autre connecteur multiple est référencé 200 et est conçu sous la forme d'un boîtier parallélépipédique rectangle 210 avec une sortie 211 pour les câbles.

Le connecteur multiple 200 comprend un support 215 en matériau polymère plastique dans lequel des connecteurs individuels 220 viennent être montés interposée entre le support 215 et une pièce d'interposition en matériau polymère plastique 230. Les connecteurs individuels 220 sont câblés individuellement à l'intérieur du connecteur 200 en sorte d'amener la puissance électrique et les différents signaux de commande et de suivi du servomoteur vers et depuis la sortie 211 pour les câbles.

La figure 9 montre le montage d'un connecteur individuel 220 entre le support 215 et la pièce d'interposition 230. Le connecteur individuel 220 a une forme sphérique 221, le support a une forme sphérique complémentaire 216, et la pièce d'interposition 230 a des lumières 231 traversantes, qui permettent de définir des degrés de liberté pour le connecteur individuel 220 lors de son engagement avec la cosse 30 correspondante.

De part et d'autre de la forme sphérique 221, le connecteur individuel 220 est constitué de deux fourches. La fourche qui fait face à la cosse 30 est serrée et ajustée pour contacter électriquement la cosse 30 avec une bonne fiabilité. Un multi-lames pré-contraint 225 présent dans la fourche qui fait face à la cosse 30 permet de fiabiliser le contact électrique. Ce multi-lames est visible en figure 10. La fourche qui est opposée à la cosse 30 est électriquement d'une manière ou d'une autre, notamment, par exemple avec des cosses Faston femelles.

## Revendications

1. Ensemble servomoteur (10, 100, 200) comprenant un servomoteur (10) et un connecteur (100, 200), l'ensemble servomoteur (10, 100, 200) comprenant en outre des moyens d'accouplement (13) à un arbre de vanne industrielle, des moyens pour recevoir une puissance électrique et une commande externe, et un moteur électrique (11) et une chaîne cinématique reliés l'un à l'autre pour appliquer une action sur ladite vanne, ainsi qu'une unité de commande locale pour commander le moteur (11) et la chaîne cinématique sous le contrôle de la commande externe, où lesdits moyens pour recevoir une puissance électrique et une commande externe comprennent un boîtier de protection (12) de l'unité de commande locale, **caractérisé en ce que** lesdits moyens pour recevoir une puissance électrique et une commande externe comprennent en plus une carte de raccordement (26) obturant une face ajourée du boîtier de protection (12), ainsi que des cosses métalliques (30) définissant des contacts électriques individuels en saillie de la carte (26) du côté externe du boîtier de protection (12) pour raccordement manuel sans outil ou vis, la carte de raccordement (26) étant placée pour obturer la face ajourée du côté intérieur de celle-ci, le servomoteur (10) comprenant de plus une pièce en matériau élastomère (27) s'étendant parallèlement à la carte de raccordement (26) sur sa face externe, percée pour laisser passer les cosses (30), et entourer chacune desdites cosses d'une lèvre (50) formée dans le matériau élastomère pour l'étanchéité, et positionnée pour également assurer l'étanchéité entre la carte de raccordement (26) et le contour interne de la face ajourée du boîtier de protection (12), l'ensemble servomoteur (10, 100, 200) comprenant de plus un connecteur amovible (100 ; 200) comprenant un boîtier (110 ; 210) et des connecteurs individuels (120 ; 220) desdites cosses (30) disposés sur une face du boîtier (110, 210) du connecteur amovible (100, 200) pour raccorder ou déconnecter simultanément lesdites cosses (30).

2. Ensemble servomoteur (10, 100, 200) selon la revendication 1, **caractérisé en ce que** la pièce en matériau élastomère (27) comprend des lèvres sur toute sa circonférence, qu'elle est assemblée avec le contour interne de la face ajourée du boîtier de protection (12) par serrage, et que les lèvres sont déformées lors du serrage pour assurer l'étanchéité.

3. Ensemble servomoteur (10, 100, 200) selon la revendication 1 ou la revendication 2, **caractérisé en ce que** la pièce en matériau élastomère (27) est en caoutchouc EPDM.

4. Ensemble servomoteur (10, 100, 200) selon l'une des revendications 1 à 3, d'un **caractérisé en ce que** la carte de raccordement (26) est reliée sur sa face interne et sans câblage à l'unité de commande locale.

5. Ensemble servomoteur (10, 100, 200) selon l'une des revendications 1 à 4, œuvre **caractérisé en ce que** la carte de raccordement (26) est un circuit imprimé, une pièce en plastique rigide (25) assemblée au circuit imprimé (26) sur sa face opposée à la pièce en matériau élastomère (27), assurant le maintien de la carte de raccordement (26) et facilitant l'insertion de cosses complémentaires sur lesdites cosses métalliques (30).

6. Ensemble servomoteur (10, 100, 200) selon l'une des revendications 1 à 5, **caractérisé en ce que** les connecteurs individuels (120)sont des fourches insérées en force dans un support (115) du boîtier (110, 210).

7. Ensemble servomoteur (10, 100, 200) selon l'une des revendications 1 à 5, **caractérisé en ce que** les connecteurs individuels (220) sont des fourches maintenues avec flottement entre deux pièces (215, 320) formant une paroi du boîtier (110, 210).

8. Ensemble servomoteur (10, 100, 200) selon l'une des revendications 1 à 7, **caractérisé en ce que** les connecteurs individuels (120, 220) comprennent un élément de contact précontraint (225) pour favoriser le contact électrique.

9. Ensemble servomoteur (10, 100, 200) selon l'une des revendications 1 à 8, **caractérisé en ce que** le servomoteur (10) est un servomoteur multi-tours ou quart de tour.

10. Ensemble servomoteur (10, 100, 200) selon l'une des revendications 1 à 9, **caractérisé en ce que** la chaîne cinématique comprend une vis sans fin et un train épicycloidal.

11. Ensemble servomoteur (10, 100, 200) selon l'une des revendications 1 à 10, **caractérisé en ce que** ladite pièce en matériau élastomère (27) comporte des fentes (50) traversantes pour laisser passer les cosses (30) entourées chacune d'une lèvre formée dans le matériau élastomère (27) pour l'étanchéité.

## Patentansprüche

1. Servomotoranordnung (10, 100, 200), umfassend einen Servomotor (10) und einen Stecker (100, 200), wobei die Servomotoranordnung (10, 100, 200) ferner Kopplungsmittel (13) an eine Welle eines Industrieventils, Mittel zum Empfangen einer elektrischen Leistung und einer externen Steuerung und einen Elektromotor (11) und eine kinematische Kette umfasst, die miteinander verbunden sind, um auf das Ventil eine Aktion auszuüben, sowie eine lokale Steuereinheit, um den Motor (11) und die kinematische Kette unter der Kontrolle der externen Steuerung zu steuern, wobei die Mittel zum Empfangen einer elektrischen Leistung und einer externen Steuerung ein Schutzgehäuse (12) der lokalen Steuereinheit umfassen, **dadurch gekennzeichnet, dass** die Mittel zum Empfangen einer elektrischen Leistung und einer externen Steuerung zusätzlich eine Anschlusskarte (26) umfassen, die eine durchbrochene Fläche des Schutzgehäuses (12) verschließt, sowie metallische Kabelschuhe (30), die individuelle elektrische Kontakte definieren, die aus der Karte (26) auf der Außenseite des Schutzgehäuses (12) für den manuellen Anschluss ohne Werkzeug oder Schrauben herausragen, wobei die Anschlusskarte (26) platziert ist, um die durchbrochene Fläche auf der Innenseite derselben zu verschließen, wobei der Servomotor (10) weiterhin ein Teil aus Elastomermaterial (27) umfasst, das sich parallel zu der Anschlusskarte (26) auf ihrer äußeren Fläche erstreckt, das durchbrochen ist, um die Kabelschuhe (30) hindurchzulassen, und um jeden der Kabelschuhe mit einer Lippe (50) zu umgeben, die in dem Elastomermaterial zum Abdichten ausgebildet ist, und positioniert ist, um ebenfalls die Dichtigkeit zwischen der Anschlusskarte (26) und der Innenkontur der durchbrochenen Fläche des Schutzgehäuses (12) abzusichern, wobei die Servomotoranordnung (10, 100, 200) weiterhin einen lösbaren Stecker (100; 200) umfasst, umfassend ein Gehäuse (110; 210) und individuelle Stecker (120; 220) der Kabelschuhe (30), die auf einer Fläche des Gehäuses (110, 210) des lösbaren Steckers (100, 200) angeordnet sind, um die Kabelschuhe (30) gleichzeitig zu verbinden oder zu lösen.

2. Servomotoranordnung (10, 100, 200) nach Anspruch 1, **dadurch gekennzeichnet, dass** das Teil aus Elastomermaterial (27) auf seinem gesamten Umfang Lippen umfasst, dass es mit der inneren Kontur der durchbrochenen Fläche des Schutzgehäuses (12) durch Spannen verbunden ist und dass die Lippen beim Spannen verformt werden, um die Abdichtung abzusichern.

3. Servomotoranordnung (10, 100, 200) nach Anspruch 1 oder Anspruch 2, **dadurch gekennzeichnet, dass** das Teil aus Elastomermaterial (27) aus EPDM-Kautschuk ist.

4. Servomotoranordnung (10, 100, 200) nach einem der Ansprüche 1 bis 3, **dadurch gekennzeichnet, dass** die Anschlusskarte (26) auf ihrer inneren Fläche und kabellos mit der lokalen Steuereinheit verbunden ist.

5. Servomotoranordnung (10, 100, 200) nach einem der Ansprüche 1 bis 4, **dadurch gekennzeichnet, dass** die Anschlusskarte (26) ein gedruckter Schaltkreis ist, ein Teil aus starrem Kunststoff (25), das mit dem gedruckten Schaltkreis (26) auf seiner Fläche, die dem Teil aus Elastomermaterial (27) gegenüberliegt, verbunden ist, wodurch der Halt der Anschlusskarte (26) abgesichert und das Platzieren von komplementären Kabelschuhen auf den metallischen Kabelschuhe (30) erleichtert wird.

6. Servomotoranordnung (10, 100, 200) nach einem der Ansprüche 1 bis 5, **dadurch gekennzeichnet, dass** die individuellen Stecker (120) Gabeln sind, die kraftschlüssig in einem Halter (115) des Gehäuses (110, 210) platziert sind.

7. Servomotoranordnung (10, 100, 200) nach einem der Ansprüche 1 bis 5, **dadurch gekennzeichnet, dass** die individuellen Stecker (220) Gabeln sind, die schwimmend zwischen zwei Teilen (215, 320) gehalten werden, die eine Wand des Gehäuses (110, 120) bilden.

8. Servomotoranordnung (10, 100, 200) nach einem der Ansprüche 1 bis 7, **dadurch gekennzeichnet, dass** die individuellen Stecker (120, 220) ein vorgespanntes Kontaktelement (225) umfassen, um den elektrischen Kontakt zu fördern.

9. Servomotoranordnung (10, 100, 200) nach einem der Ansprüche 1 bis 8, **dadurch gekennzeichnet, dass** der Servomotor (10) ein Mehrfachumdrehungs- oder Viertelumdrehungs-Servomotor ist.

10. Servomotoranordnung (10, 100, 200) nach einem der Ansprüche 1 bis 9, **dadurch gekennzeichnet, dass** die kinematische Kette eine Schnecke und ein Planetengetriebe umfasst.

11. Servomotoranordnung (10, 100, 200) nach einem der Ansprüche 1 bis 10, **dadurch gekennzeichnet, dass** das Teil aus Elastomermaterial (27) durchgängige Schlitze (50) aufweist, um die Kabelschuhe (30) hindurchzulassen, von denen jeder von einer Lippe umgeben ist, die in dem Elastomermaterial (27) zum Abdichten ausgebildet ist.

## Claims

1. An actuator assembly (10, 100, 200) comprising an actuator (10) and a connector (100, 200), the actuator assembly (10, 100, 200) further comprising coupling means (13) for coupling to an industrial valve shaft, means for receiving electrical power and an external command, and an electric motor (11) and a kinematic chain connected to one another in order to apply an action on said valve, as well as a local command unit for commanding the motor (11) and the kinematic chain under the control of the external command, where said means for receiving electrical power and an external command comprise a protective housing (12) of the local command unit, **characterized in that** said means for receiving electrical power and an external command also comprise a connection board (26) closing off an open face of the protective housing (12), as well as metal lugs (30) defining individual electrical contacts protruding from the board (26) on the outer side of the protective housing (12) for manual connection without tools or screws, the connecting board (26) being placed so as to close off the open face on the inner side thereof, the actuator (10) also comprising a part made from an elastomeric material (27) extending parallel to the connection board (26) on the outer face thereof, pierced to allow the lugs (30) to pass, and to surround each of said lugs with a lip (50) formed in the elastomeric material for tightness, and positioned also to ensure the tightness between the connection board (26) and the inner contour of the open face of the protective housing (12), the actuator assembly (10, 100, 200) also comprising a removable connector (100; 200) comprising a housing (110; 210) and individual connectors (120; 220) of said lugs (30) positioned on a face of the housing (110, 210) of the removable connector (100, 200) in order to connect or disconnect said lugs (30) simultaneously.

2. The actuator assembly (10, 100, 200) according to claim 1, **characterized in that** the part made from elastomeric material (27) comprises lips over its entire circumference, **in that** it is assembled with the inner contour of the open face of the protective housing (12) by clamping, and **in that** the lips are deformed during the clamping to ensure the tightness.

3. The actuator assembly (10, 100, 200) according to claim 1 or claim 2, **characterized in that** the part made from elastomeric material (27) is made from EPDM rubber.

4. The actuator assembly (10, 100, 200) according to one of claims 1 to 3, **characterized in that** the connection board (26) is connected on its inner face and without cabling to the local command unit.

5. The actuator assembly (10, 100, 200) according to one of claims 1 to 4, **characterized in that** the connection board (26) is a printed circuit, a part made from rigid plastic (25) assembled to the printed circuit (26) on its face opposite the part made from elastomeric material (27), ensuring the maintenance of the connection board (26) and facilitating the insertion of additional lugs on said metal lugs (30).

6. The actuator assembly (10, 100, 200) according to one of claims 1 to 5, **characterized in that** the individual connectors (120) are forks forcibly inserted into a support (115) of the housing (110, 210).

7. The actuator assembly (10, 100, 200) according to one of claims 1 to 5, **characterized in that** the individual connectors (220) are forks maintained with floating between two parts (215, 320) forming a wall of the housing (110, 210).

8. The actuator assembly (10, 100, 200) according to one of claims 1 to 7, **characterized in that** the individual connectors (120, 220) comprise a prestressed contact element (225) in order to favor the electrical contact.

9. The actuator assembly (10, 100, 200) according to one of claims 1 to 8, **characterized in that** the actuator (10) is a multi-turn or quarter-turn actuator.

10. The actuator assembly (10, 100, 200) according to one of claims 1 to 9, **characterized in that** the kinematic chain comprises a worm and a planetary gearset.

11. The actuator assembly (10, 100, 200) according to one of claims 1 to 10, **characterized in that** said part made from elastomeric material (27) includes through slots (50) in order to allow the lugs (30) to pass, each surrounded by a lip formed in the elastomeric material (27) for tightness.
